# EUROPÄISCHE PATENTSCHRIFT

(11) **EP 1 100 643 B1**
(45) Veröffentlichungstag und Bekanntmachung des Hinweises auf die Patenterteilung: **11.09.2002**
(21) Anmeldenummer: 99936563.8
(22) Anmeldetag: 17.07.1999
(51) Int. Cl.: B23D 1/00

(54) **VERFAHREN UND VORRICHTUNG ZUM QUERTEILEN VON BÄNDERN ODER BLECHEN IN DER WALZ-BZW TRANSPORTLINIE**
METHOD AND DEVICE FOR CUTTING TO LENGTH STRIPS OR SHEETS IN THE ROLLING OR TRANSPORT LINE
PROCEDE ET DISPOSITIF POUR SEPARER TRANSVERSALEMENT DES RUBANS OU DES TOLES DANS LA LIGNE DE LAMINAGE OU DE TRANSPORT

(30) Priorität: 24.07.1998 DE 19833324
(43) Veröffentlichungstag der Anmeldung: 23.05.2001
(73) Patentinhaber: SMS Demag Aktiengesellschaft, 40237 Düsseldorf (DE)
(72) Erfinder: GRAFE, Horst, D-57271 Hilchenbach (DE); LADDA-ZUNK, Barbara, D-57271 Hilchenbach (DE); MÜNKER, Max, D-57462 Olpe (DE)
(74) Vertreter: Valentin, Ekkehard, Dipl.-Ing.
(86) Internationale Anmeldenummer: EP9905115
(87) Internationale Veröffentlichungsnummer: WO00005019

(56) Entgegenhaltungen:
- DE-A- 1 436 909
- DE-A- 4 336 626
- DE-B- 1 427 899

## Beschreibung

Die Erfindung betrifft ein Verfahren zum Wechseln einer Schere zum Querteilen von Bändern oder Blechen in der Walz- bzw. Transportlinie, insbesondere auf strom Rollgang, mit je einem oberhalb und unterhalb des Bandes angeordneten Messerträger, die mittels Halterungselementen geführt werden. Die Erfindung betrifft auch eine Vorrichtung zur Durchführung des Verfährens.

Bekannt sind stationäre oder fliegende Scheren, die aus der Walzlinie bzw. dem Rollgang ein- oder ausbringbar sind, jedoch nur dann, wenn der Rollgang im Bereich der Schere oder einer anderen Trenneinrichtung mit dem zu schneidenden Band oder Blech nicht belegt ist.

Eine permanent in der Walz- bzw. Transportlinie fest angeordnete Schere wird vielfach als hinderlich empfunden, weil sie einen Bereich des Rollgangs überdeckt und damit die Kontrolle in diesem Bereich erschwert. Auch kann die in der Walz- oder Transportlinie befindliche Schere beim Durchlauf des Bandanfanges den Bandlauf stören. Sie kann aber auch beim weiteren Bandlauf einen Störfaktor darstellen, insbesondere dann, wenn an der Schere oder an dem von ihr überdeckten Bereich des Rollganges Inspektionen oder Wartungsarbeiten vorzunehmen sind. Insgesamt wird durch eine unverrückbar angeordnete Schere im Bereich der Walz- bzw. Transportlinie die Zugänglichkeit eines Rollgangsbereiches beeinträchtigt und unter Umständen der Bandlauf gestört.

Aus der den nächstkommenden Stand der Technik beschreibenden DE 43 36 626 A1 ist eine Querteilschere in Bandbehandlungsanlagen bekannt, bei der die Ober- und Untermesserträger im Scherenrahmen angeordnet sind und mindestens ein Messerträger im Scherenrahmen auf- und abbeweglich ist. Der Scherenrahmen ist zweiteilig ausgebildet. Die Rahmenteile sind miteinander verklemmt. Um die Wechselzeiten für die Messerträger zu verkürzen, wird der gesamte Scherenrahmen-Oberteil mit dem Scherenmesser als eine Baueinheit ausgewechselt. Die Schere selbst bleibt unverändert in der Bandtransportlinie verankert.

Die DE 1 427 899 A beschreibt eine Längsschneidevorrichtung für Walzbänder mit ortsfestem Rahmen in der Walzlinie. Die gegeneinander einstellbaren Schneidwerkzeuge sind in einem Innenrahmen gelagert, der in senkrechter Richtung in dem ortsfesten Rahmen verschiebbar ist Am Innenrahmen ist außerdem eine Tragrolle angeordnet, die mit einer Tischrolle zusammen wirkt, um das Walzband für den Schneidvorgang zu spannen. Auch diese vorbekannte Schere bleibt permanent in der Walzlinie angeordnet und es ist lediglich ein freier Durchlauf für das Walzband vorgesehen, wenn nicht geschnitten werden soll.

Der Erfindung liegt die Aufgabe zugrunde, ein Verfahren und eine Vorrichtung zum Scherenwechsel beim Querteilen von Bändem oder Blechen in der Walzlinie mit einem Rollgang, mit je einem oberhalb und unterhalb des Bandes angeordneten Messerträger, die mittels Halterungselementen geführt werden, anzugeben, durch welche die vorgenannten Nachteile und Schwierigkeiten vorteilhaft überwunden werden.

Bei einem Verfahren der eingangs genannten Gattung wird die Aufgabe mit den kennzeichnenden Merkmalen des Anspruchs 1 gelöst.

Hiemach wird die Schere mit den Messerträgern und mit deren Haiterungselementen bei in der Walz- bzw. Transportlinie befindlichem Band oder Blech nach jedem Schnitt aus der Walzlinie zur Seite in eine neutrale Warteposition ausgefahren und vor dem Ausfahren der Schere wird die vordere Verbindung zwischen den Messerträgern bzw. zwischen den die Walzlinie übergreifenden Halterungselementen geöffnet. Für einen nachfolgenden Schnitt wird die Schere in die Walzlinie und diese U-förmig übergreifend eingefahren, die vordere Verbindung der Schere wird vor dem folgenden Schnitt geschlossen und wird unter Verwendung eines Verklammerungselementes form- und kraftschlüssig verkoppelt. Mit dem Einfahren der Schere in die Walz- bzw. Transportlinie wird ein Teil des Rollganges aus der Walz- bzw. Transportlinie zur Seite herausgeschoben. Zugleich mit dem Ausfahren der Schere aus der Walz- bzw. Transportlinie in die Warteposition wird der ausgeschobene Teil des Rollganges wieder in diesen eingeschoben.

Das erfindungsgemäße Verfahren eröffnet in vorteilhafter Weise die Möglichkeit, zwischen Walzgerüst und Aufwickelhaspel eine Schere anzuordnen, die zum Schnitt über das Band schiebbar und danach wieder herausziehbar ist. Die Schere kann mit der offenen Seite über das Band geschoben werden. Danach kann die offene Seite, nachdem sie sich außerhalb der Bandbreite befindet, zur Aufnahme der Scherkräfte formschlüssig verbunden werden.

Beim Durchlauf des Bandanfanges ist die Schere nicht in der Transportlinie und kann daher den Bandlauf nicht stören. Anstelle der Schere befindet sich dann ein ein- und ausfahrbares Rollgangsstück in der Linie.

Die offene Schere wird erst unmittelbar vor dem Schnitt eingefahren. Im übrigen bleibt der Rollgang nach oben offen, und ist trotz Anordnung der Schere weiterhin frei zugänglich.

Eine Vorrichtung zum Scherenwechsel beim Querteilen von Bändern oder Blechen in der Walz- bzw. Transportlinie, insbesondere auf einem Rollgang, zur Durchführung des Verfahrens nach der Erfindung sieht vor, daß die Schere einschließlich ihres Antriebsaggregates auf einem schienengeführten Fahrschemel angeordnet ist, der bei in der Walz- bzw. Transportlinie befindlichem Band oder Blech mittels eines Fahrantriebes quer zur Walz- bzw. Transportlinie verfahrbar ist. Die Schere weist einen gegen die Walz- bzw. Transportlinie U-förmig offenen, antriebsseitig geschlossenen Rahmen auf, an dem sowohl antriebsseitig als auch rollgangsseitig Halterungselemente mit darin angeordneten Lagerungen für die Messerträger vorhanden sind. Der Fahrschemel ist mit einem fahrbaren Teil des Rollgangs zusammenkoppelbar.

Infolge der U-förmig offenen Konstruktion ist die Schere ohne weiteres, den Rollgang übergreifend, in die Walzlinie einfahrbar. Der obere Messerträger bzw. der untere Messerträger der Schere befindet sich beim Ein- bzw. Ausfahren der Schere frei auskragend oberhalb bzw. unterhalb des Bandes bzw. des Bleches.

Weitere vorteilhafte Ausgestaltungen der Vorrichtung sind entsprechend den Unteransprüchen vorgesehen.

Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1: in Seitenansicht mit Blickrichtung zur Walzlinie eine nach der Erfindung ausgebildete Schere auf einem schienengeführten Fahrschemel mit angekoppeltem fahrbaren Teil des Rollgangs;
- Figur 2: in Seitenansicht den vorderen Teil der Schere mit ausgefahrenem Verklammerungselement;
- Figur 3: in Frontansicht die auf dem Fahrschemel angeordnete Schere mit frontseitigem Verklammerungselement gemäß Fig. 2;
- Figur 4: in Frontansicht eine Schere mit Kupplungsstangen für das Zusammenkoppeln des Maschinenrahmens der Schere;
- Figur 5: in Seitenansicht den vorderen Teil einer Schere mit einem abklappbaren Verklammerungselement;
- Figur 6: in Frontansicht die Schere mit abklappbarem Verklammerungselement gemäß Fig. 5.

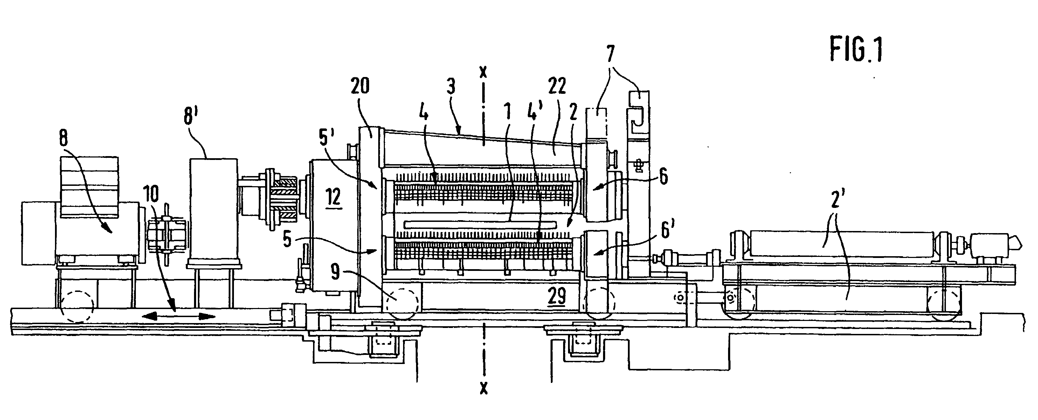

Die in Fig. 1 dargestellte Vorrichtung zum Querteilen von Bändern 1 oder Blechen in der Walzlinie x-x, insbesondere auf einem Rollgang 2, zeigt die Schere 3 in einer Position kurz vor Durchführung eines Schnittes, mit noch geöffneten Armen 22, 29 ihres Maschinenrahmens 20. Die Schere 3 besitzt ein Antriebsaggregat 8 mit Untersetzungsgetriebe 8' sowie einem am Rahmen 20 angeflanschten Synchronisationsgetriebe 12. Die Schere 3 ist einschließlich ihres Antriebsaggregats mittels eines Fahrantriebes 10 und eines auf Schienen geführten Fahrschemels 9 quer zur Walz- bzw. Transportlinie x-x verfahrbar. Der Fahrschemel 9 ist mit einem fahrbaren Teil 2' des Rollgangs 2 zusammengekoppelt und wird mit der Schere 3 gemeinsam in dem Sinne verfahren, daß er sich außerhalb der Walzlinie x-x befindet, wenn die Schere 3 - wie in Fig. 1 dargestellt - in der Walzlinie x-x positioniert ist, und umgekehrt, bei ausgefahrener Schere 3 wieder in den Rollgang 2 eingefügt ist.

Wie die Fig. 1 weiter zeigt, ist am rollgangsseitigen Ende wenigstens ein Verklammerungselement 7 mit Betätigungsorganen 11, 25, 30, 36 angeordnet. Die Betätigungsorgange sind vorliegend als hydraulische Kolbenzylindereinheiten ausgebildet und als Kraftmittel bezeichnet. Am rollgangsseitigen Ende der Rahmenarme 22, 29 befinden sich die Walzlinie x-x übergreifende Halterungselemente 6, 6', welche (nicht dargestellte) Lagerungen für die als gegenläufig rotierbare Rotoren der Messerträger 4, 4' aufnehmen.

Am antriebsseitigen Bereich des Maschinenrahmens 20 befinden sich gleichartige Halterungselemente 5, 5', welche ebenfalls die antriebsseitigen Lagerungen der Messerträger 4, 4' aufnehmen.

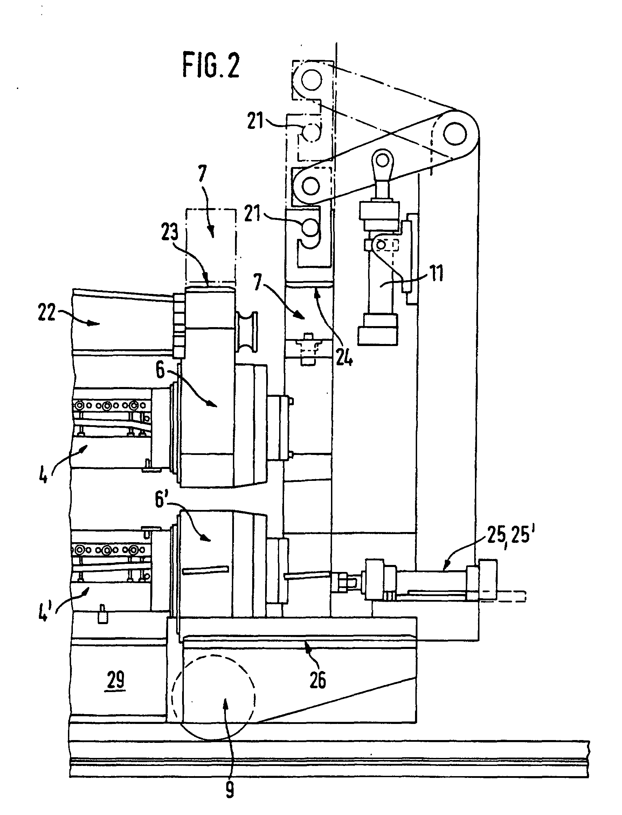

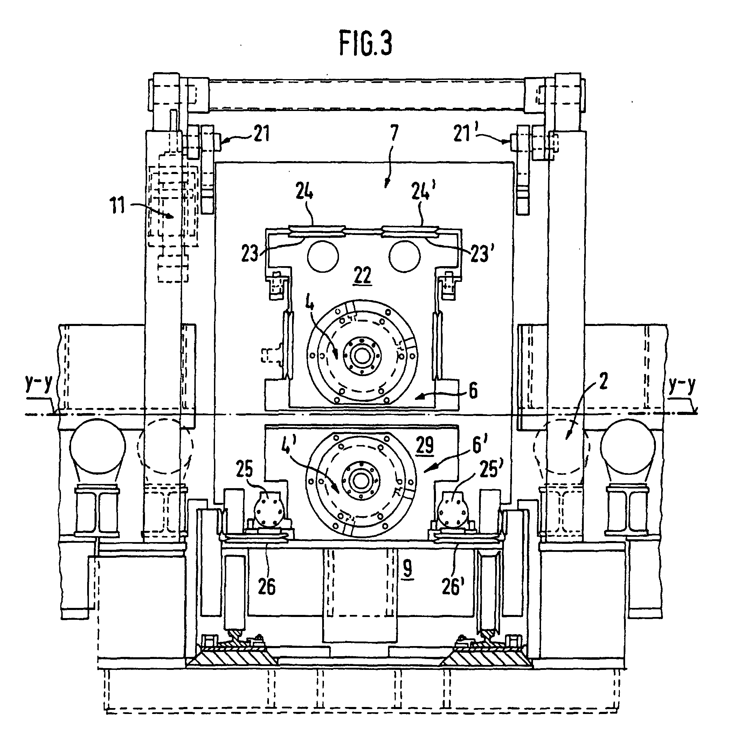

Der U-förmig offenen Seite des Maschinenrahmens 20 ist das die rollgangsseitigen Halterungselemente 6, 6' zusammenkoppelbare Verklammerelement 7 zugeordnet. Dieses Verklammerungselement 7 ist gemäß Darstellung in den Figuren 2 und 3 zum form- und kraftschlüssigen Verbinden der Halterungselemente 6, 6' ausgebildet.

Zum Einheben des Verklammerungselementes 7 in die Gleitbahnen 26, 26' bzw. zum Herausheben ist gemäß Fig. 2 und Fig. 3 das hydraulisches Kraftmittel 11 vorgesehen. Weiterhin zeigen die Fig. 2 und 3, daß das Halterungselement 6 am freien Ende des oberen, horizontalen Rahmenarmes 22 zwei Druckplatten 23, 23' besitzt und daß das Verklammerungselement 7 kongruente Gleitplatten 24, 24' sowie das Halterungselement 6' zwei Druckplatten und das Verklammerungselement 7 kongruente Gleitplatten aufweisen. Das Verklammerungselement 7 ist durch Kraftmittel 25, 25' auf einer horizontalen Gleitbahn 26, 26' mit seinen Gleitplatten 24, 24' über die Druckplatten 23, 23' zur Ausbildung einer form- und kraftschlüssigen Koppelung schiebbar.

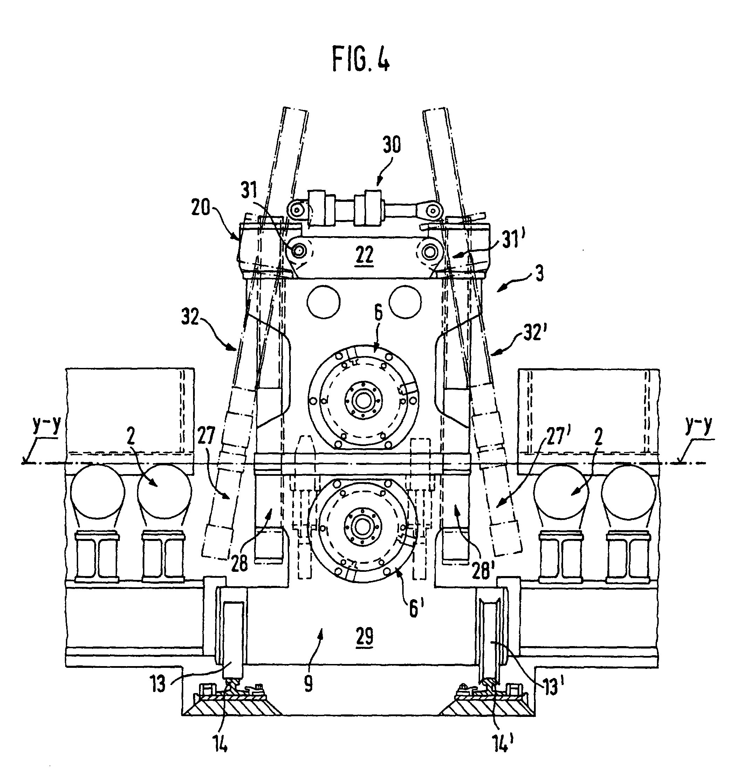

In der Fig. 4 ist eine alternative Ausführung der Koppelungseinrichtung zwischen dem oberen Rahmenarm 22 und dem unteren Rahmenarm 29 des Maschinenrahmens 20 der Schere 3 gezeigt. Dabei ist vorgesehen, daß das Halteelement 6 am freien Ende des oberen, horizontalen Rahmenarmes 22 mit zu beiden Seiten ausschwenkbar angelenkten Kupplungsstangen 32, 32' mit Spindelanstrieb 31 ausgebildet ist.

Die Kupplungsstangen 32, 32' sind mittels unteren Ausnehmungen 27, 27' in kongruente Kupplungsstutzen 28, 28' des unteren Rahmenarmes 29 des Maschinenrahmens 20 eingreifbar und durch ein Kraftmittel 30 anstellbar. Die Kupplungsstangen 32, 32' werden zur Ausbildung einer form- und kraftschlüssigen Verbindung mit Hilfe ihrer Spindelantriebe 31, 31' in die Position gebracht, in der die Ausnehmungen an den Kupplungsstutzen anliegen.

Im übrigen zeigt Fig. 4 in anschaulicher Weise die Ausbildung des Fahrschemels 9 mit Spurkranz-Rädern 13, 13' auf Führungsschienen 14, 14'.

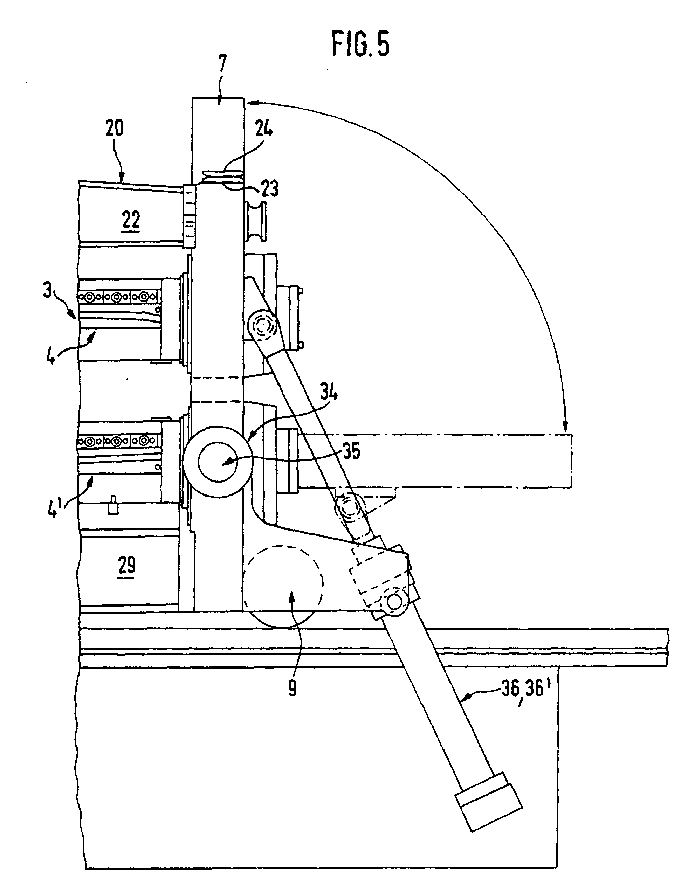

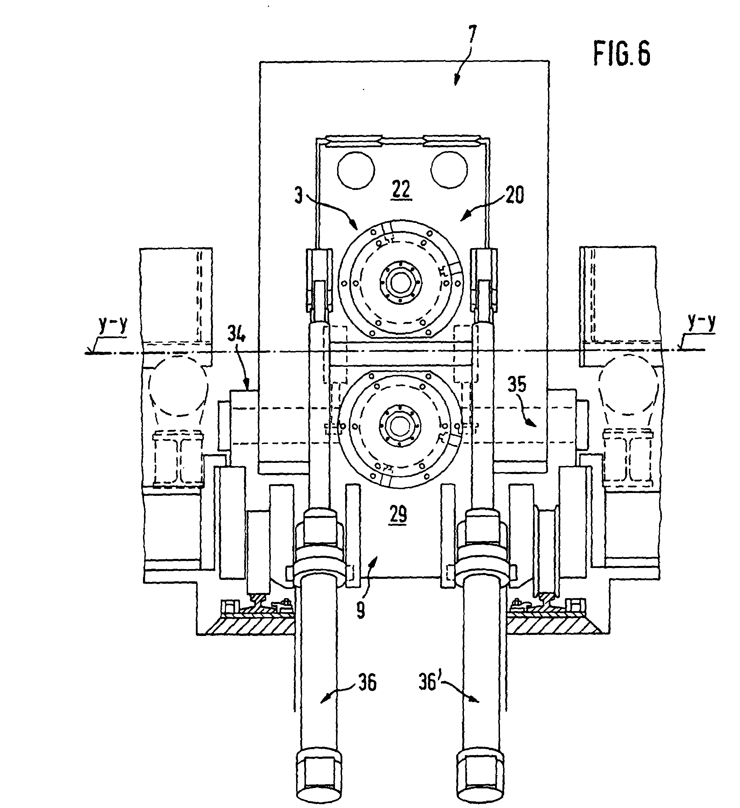

Eine weitere alternative Ausgestaltung der Verbindung an der offenen Seite der Schere 3 zeigen die Fig. 5 und 6. Bei dieser Ausführung ist das quer zu den Armen 22, 29 des Maschinenrahmens 20 angeordnete Verklammerungselement 7 mit einem Gelenk 34 mit zur Walzlinie parallel verlaufender Schwenkachse 35 ausgebildet. Mit Hilfe der Kraftmittel 36, 36' wird das Verklammerungselement 7 zwecks Zusammenkoppeln der beiden Rahmenarme 22, 29 hochgeklappt und zum Lösen der Verkoppelungsposition abgeklappt. Sowohl das abklappbare als auch hochklappbare Verklammerungselement 7 und die zugeordneten Kraftmittel 36, 36' sind auf dem Fahrschemel 9 angeordnet. Auch bei dieser Konstruktion wirken im geschlossenen Zustand die unteren Druckplatten 23, 23' mit den darüberschiebbaren Gleitplatte 24, 24' in der Verschlußposition zusammen und ergeben eine sowohl formschlüssige, als auch kraftschlüssige Verbindung der beiden Arme 22 und 29 des Maschinenrahmens 20.

Die verschiedenen Ausgestaltungen zeigen eine fliegende oder stationäre Schere zum Querteilen von Bändern oder Blechen, die aus der Walzlinie bzw. dem Rollgang ein- und ausgefahren werden kann, während das Band 1 oder das Blech in der Linie x-x auf dem Rollgang 2 in Rollgangsrichtung bewegt wird oder auch still steht. Weil dabei die Schere erst unmittelbar vor dem Schnitt eingefahren wird, bleibt der Rollgang nach oben offen und kann nach Einbau der Schere frei zugänglich bleiben. Die Schere kann außerhalb der Linie gewartet werden und im Falle einer Störung kurzfristig aus der Linie herausgefahren werden.

### Bezugszeichenliste

- 1: Band/Blech
- 22': Rollgang
- 3: Schere
- 4,4': Messerträger
- 5,5': Halterungselement
- 6, 6': Halterungselement
- 7: Verklammerungselement
- 8: Antriebsaggregat
- 8': Übersetzungsgetriebe
- 9: Fahrschemel
- 10: Fahrantrieb
- 11: Kraftmittel
- 12: Synchronisationsgetriebe
- 13, 13': Spurkranzräder
- 14, 14': Führungsschienen
- 20: Maschinenrahmen
- 21: Kupplungselemente
- 22: oberer Rahmenarm
- 23, 23': Druckplatte
- 24, 24': Gleitplatte
- 25, 25': Kraftmittel
- 26, 26': Gleitbahn
- 27, 27': Ausnehmung
- 28, 28': Kupplungsstutzen
- 29: unterer Rahmenarm
- 30: Kraftmittel
- 31: Spindeltrieb
- 32, 32': Kupplungsstange
- 34: Gelenke
- 35: Schwenkachse
- 36, 36': Kraftmittel

## Patentansprüche

1. Verfahren zum Wechseln einer Schere (3) zum Querteilen von Bändern (1) oder Blechen in der Walz- oder Transportlinie (x-x) mit einem Rollgang (2), mit je einem oberhalb und unterhalb des Bandes (1) angeordneten Messerträger (4, 4'), die mittels Halterungselementen (5, 5'; 6, 6') geführt werden,
**dadurch gekennzeichnet,**
**daß** die Schere (3) mit den Messerträgern (4, 4') und mit deren Halterungselementen (5, 5'; 6, 6') bei in der Walz- bzw. Transportlinie befindlichem Band oder Blech nach jedem Schnitt aus der Walzlinie (x-x) zur Seite in eine neutrale Warteposition ausgefahren und vor dem Ausfahren der Schere 3 die vordere Verbindung zwischen den Messerträgern (4, 4') bzw. zwischen den die Walzlinie (x-x) übergreifenden Halterungselementen (6, 6') geöffnet wird und daß die Schere (3) für einen nachfolgenden Schnitt in die Walzlinie und diese U-förmig übergreifend eingefahren wird und daß die vordere Verbindung vor einem folgenden Schnitt geschlossen und unter Verwendung eines Verklammerungselementes (7 bzw. 32) form- und kraftschlüssig verkoppelt wird, wobei mit dem Einfahren der Schere (3) in die Walz- bzw. Transportlinie (x-x) ein Teil (2') des Rollgangs (2) aus der Walz- bzw. Transportlinie (x-x) zur Seite herausgeschoben wird und zugleich mit dem Ausfahren der Schere (3) aus der Walz- bzw. Transportlinie (x-x) in die Warteposition, der Teil (2') des Rollgangs wieder in diesen eingeschoben wird.

2. Vorrichtung zum Wechseln einer Schere (3) zum Querteilen von Bändern (1) oder Blechen in der Walz- bzw. Transportlinie mit einem Rollgang (2) zur Durchführung des Verfahrens nach Anspruch 1,
**dadurch gekennzeichnet,**
**daß** die Schere (3) einschließlich ihres Antriebsaggregates (8) auf einem schienengeführten Fahrschemel (9) angeordnet ist, der, bei in der Walz- bzw. Transportlinie befindlichem Band oder Blech, mittels eines Fahrantriebes (10) quer zur Walz- bzw. Transportlinie (x-x) verfahrbar ist und die Schere (3) einen gegen die Walz- bzw. Transportlinie (x-x) U-förmig offenen, antriebsseitig geschlossenen Rahmen (20) aufweist, an dem sowohl antriebsseitig als auch rollgangsseitig Halterungselemente (5, 5'; 6, 6') mit darin angeordneten Lagerungen für die Messerträger (4,4') vorhanden sind und der Fahrschemel (9) mit einem fahrbaren Teil (2') des Rollgangs (2) zusammengekoppelt ist.

3. Vorrichtung nach Anspruch 2,
**dadurch gekennzeichnet,**
**daß** der Fahrschemel (9) am rollgangsseitigen Ende wenigstens ein Verklammerungselement (7) mit Betätigungsorganen (11, 25, 30, 36) aufnimmt.

4. Vorrichtung nach Anspruch 2 oder 3,
**dadurch gekennzeichnet,**
**daß** der U-förmig offenen Seite des Rahmens (20) ein das rollgangsseitige Halterungselement (6, 6') zusammenkoppelbare Verklammerungselement (7) zugeordnet ist.

5. Vorrichtung nach einem der Ansprüche 2 bis 4,
**dadurch gekennzeichnet,**
**daß** das Verklammerungselement (7) mit Kupplungselementen (21) zum Kuppeln mit den Halterungselementen (6, 6') der Rahmenarme (22, 29) ausgebildet ist.

6. Vorrichtung nach einem der Ansprüche 2 bis 5.
**dadurch gekennzeichnet,**
**daß** das Halterungselement (6) am freien Ende des oberen, horizontalen Rahmenarmes (22) wenigstens eine Druckplatte (23, 23') besitzt und das Verklammerungselement (7) diese übergreifbare kongruente Gleitplatten (24, 24') aufweist, und daß das Verklammerungselement (7) durch Kraftmittel (25, 25') auf einer horizontalen Gleitbahn (26, 26') mit seinen Gleitplatten (24, 24' und 38, 38') über die Druckplatten (23, 23' und 37, 37') zur Ausbildung einer form- und kraftschlüssigen Koppelung schiebbar ist.

7. Vorrichtung nach einem der Ansprüche 2 bis 6.
**dadurch gekennzeichnet,**
**daß** das Halterungselement (6) am freien Ende des oberen, horizontalen Rahmenarmes (22) mit zu beiden Seiten ausschwenkbar angelenkten Gewindespindel-Kupplungsstangen (32, 32') ausgebildet ist, die mittels Ausnehmungen (27, 27') in kongruente Kupplungsstutzen (28, 28') des unteren Rohmenarmes (29) bzw. in den kongruenten Kupplungsstutzen am oberen Halteelement (6) eingreifbar und durch ein Kraftmittel (30) anstellbar sind zur Ausbildung einer form- und kraftschlüssigen Verbindung mit Hilfe ihrer Spindeltriebe (31, 31').

8. Vorrichtung nach einem der Ansprüche 2 bis 7,
**dadurch gekennzeichnet,**
**daß** ein quer zu den Rahmenarmen (22, 29) zugeordnetes Verklammerungselement (7) in einem Gelenk (34) mit zur Walzlinie parallel verlaufender Schwenkachse (35) mit Hilfe von wenigstens einem Kraftmittel (36) zum Zusammenkoppeln der beiden Rahmenarme (22, 29) hochklappbar bzw. zum Lösen der Verkoppelung der Rahmenarme abklappbar ausgebildet ist.

## Claims

1. Method of changing a cutter (3) for transverse cutting of strips (1) or sheets in the rolling or transport line (x-x) with a roller path (2) with knife carriers (4, 4') which are respectively arranged above and below the strip (1) and which are guided by means of mounting elements (5, 5'; 6, 6'), **characterised in that** the cutter (3) together with the knife carriers (4, 4') and the mounting elements (5, 5'; 6, 6') thereof are, when strip is disposed in the rolling or transport line, moved out of the rolling line (x-x) to the side into a neutral waiting position after each cut and before movement out of the cutter (3) the front connection between the knife carriers (4, 4') or between the mounting elements (6, 6') engaging over the rolling line (x-x) is opened and that for a succeeding cut the cutter (3) is moved into the rolling line and engages over this in U-shape and that the front connection is closed before a following cut and coupled in shape-locking and force-locking manner with use of a clamping element (7 or 32), wherein with the movement of the cutter (3) into the rolling or transport line (x-x) a part (2') of the roller path (2) is pushed out of the rolling or transport line (x-x) to the side and the part (2') of the roller path is pushed back into the rolling or transport line (x-x) simultaneously with the movement of the cutter (3) out of this and into the waiting position.

2. Device for changing a cutter (3) for transverse cutting of strips (1) or sheets in the rolling or transport line (x-x) with a roller path (2) for performing the method according to claim 1, **characterised in that** the cutter (3) inclusive of its drive unit (8) is arranged on a rail-guided compensating carriage (9) which, when strip or sheet is disposed in the rolling or transport line, is movable transversely to the rolling or transport line (x-x) by means of a travel drive and the cutter (3) comprises a frame (20) which is open in U-shape towards the rolling or transport line (x-x) and closed at the drive side and at which mounting elements (5, 5'; 6, 6') with mounts arranged therein for the knife carriers (4, 4') are present both at the drive side and the roller path side and the compensating carriage (9) is coupled together with a movable part (2') of the roller path (2).

3. Device according to claim 2, **characterised in that** the compensating carriage (9) receives at the end at the roller path side at least one clamping element (7) with actuating devices (11, 25, 30, 36).

4. Device according to claim 2 or 3, **characterised in that** the side of the frame (20) open in U-shape is associated with a clamping element (7) able to be coupled together with the mounting element (6, 6') at the roller path side.

5. Device according to one of claims 2 to 4, **characterised in that** the clamping element (7) is constructed with coupling elements (21) for coupling with the mounting elements (6, 6') of the frame arms (22, 24).

6. Device according to one of claims 2 to 5, **characterised in that** the mounting element (6) has at least one pressure plate (23, 23') at the free end of the upper, horizontal frame arm (22) and the clamping element (7) has congruent slide plates (24, 24') engageable over this pressure plate or plates, and that the clamping element (7) together with its slide plates (24, 24' and 38, 38') can be pushed by force means (25, 25') on a horizontal slide path (26, 26') over the pressure plates (23, 23' and 37, 37') for formation of a shape-locking and force-locking coupling.

7. Device according to one of claims 2 to 6, **characterised in that** the mounting element (6) is formed at the free ends of the upper, horizontal frame arm (22) with threaded spindle coupling rods (32, 32') articulated to be pivotable out at both sides, the coupling rods being engageable by means of recesses (27, 27') in congruent coupling supports (28, 28') of the lower frame arm (29) or in the congruent supports at the upper mounting element (6) and being adjustable by a force means (30) for formation of a shape-locking and force-locking connection with the aid of its spindle drive (31, 31').

8. Device according to one of claims 2 to 7, **characterised in that** a clamping element (7) associated transversely to the frame arms (22, 29) is constructed, in a joint (34) with pivot axles (35) extending parallel to the rolling line, to be pivotable with the help of at least one force means (36) upwardly for coupling together the two frame arms (22, 29) and downwardly for releasing the coupling of the frame arms.

## Revendications

1. Procédé de changement d'une cisaille (3) pour diviser transversalement des bandes (1) ou des tôles dans la ligne de laminage ou de transport (x-x), comportant un train de rouleaux (2), des porte-couteaux (4, 4') agencés respectivement au-dessus et au-dessous de la bande (1) qui sont guidés au moyen d'éléments de maintien (5, 5' ; 6, 6'),
**caractérisé en ce que**
la cisaille (3), comportant les porte-couteaux (4, 4') et leurs éléments de maintien (5, 5' ; 6, 6'), est sortie après chaque coupe hors de la ligne de laminage (x-x) vers le côté jusque dans une position d'attente neutre, la bande ou la tôle étant située dans la ligne de laminage ou de transport, et avant la sortie de la cisaille (3) la liaison antérieure entre les porte-couteaux (4, 4') ou entre les éléments de maintien (6, 6') coiffant la ligne de laminage (x-x) est ouverte, et **en ce que** pour la coupe suivante la cisaille (3) est rentrée dans la ligne de laminage de manière à la coiffer en forme de U, et **en ce que** la liaison antérieure est fermée avant une coupe suivante et est couplée en coopération de formes et de forces en utilisant un élément de pincement (7 ou 32), et lors de la rentrée de la cisaille (3) dans la ligne de laminage ou de transport (x-x) une partie (2') du train de rouleaux (2) est sortie hors de la ligne de laminage ou de transport (x-x) vers le côté, et simultanément avec la sortie de la cisaille (3) hors de la ligne de laminage ou de transport (x-x) jusque dans la position d'attente, la partie (2') du train de rouleaux est réintroduite dans celle-ci.

2. Dispositif de changement d'une cisaille (3) pour diviser transversalement des bandes (1) ou des tôles dans la ligne de laminage ou de transport, comportant un train de rouleaux (2), pour mettre en oeuvre le procédé selon la revendication 1,
**caractérisé en ce que**
la cisaille (3), y compris son unité d'entraînement (8), est agencée sur un chariot (9) guidé sur des rails qui est mobile perpendiculairement à la ligne de laminage ou de transport (x-x) au moyen d'un entraînement de déplacement (10), la bande ou la tôle étant située dans la ligne de laminage ou de transport, et la cisaille (3) comprend un cadre (20) ouvert en forme de U contre la ligne de laminage ou de transport (x-x) et fermé du côté entraînement, cadre sur lequel sont prévus, aussi bien du côté entraînement que du côté train de rouleaux, des éléments de maintien (5, 5' ; 6, 6') sur lesquels sont agencées des montures pour les porte-couteaux (4, 4'), et **en ce que** le chariot (9) est accouplé à une partie mobile (2') du train de rouleaux (2).

3. Dispositif selon la revendication 2, **caractérisé en ce que** le chariot (9) reçoit à l'extrémité côté train de rouleaux au moins un élément de pincement (7) comportant des organes d'actionnement (11, 25, 30, 36).

4. Dispositif selon l'une ou l'autre des revendications 2 et 3, **caractérisé en ce qu'**un élément de pincement (7) susceptible d'accoupler l'élément de maintien (6, 6') côté train de rouleaux est associé au côté ouvert en forme de U du cadre (20).

5. Dispositif selon l'une des revendications 2 à 4, **caractérisé en ce que** l'élément de pincement (7) est réalisé avec des éléments d'accouplement (21) pour l'accouplement avec les éléments de maintien (6, 6') des bras de cadre (22, 29).

6. Dispositif selon l'une des revendications 2 à 5, **caractérisé en ce que** l'élément de maintien (6) possède à l'extrémité libre du bras de cadre supérieur horizontal (22) au moins une plaque de pression (23, 23'), et **en ce que** l'élément de pincement (7) comprend des plaques coulissantes coïncidentes (24, 24') susceptibles de coiffer ladite plaque de pression, et **en ce que** l'élément de pincement (7) est susceptible d'être poussé par des moyens de force (25, 25') sur une voie de coulissement horizontale (26, 26') avec ses plaques coulissantes (24, 24' et 38, 38') sur les plaques de pression (23, 23' et 37, 37') pour réaliser un accouplement en coopération de formes et de forces.

7. Dispositif selon l'une des revendications 2 à 6, **caractérisé en ce que** l'élément de maintien (6) est réalisé, à l'extrémité libre du bras de cadre supérieur horizontal (22), avec des barres d'accouplement à broche filetée (32, 32') articulées en basculement vers les deux côtés, qui sont susceptibles de s'engager au moyen d'évidements (27, 27') dans des manchons d'accouplement coïncidents (28, 28') du bras de cadre inférieur (29) ou dans les manchons d'accouplement coïncidents sur l'élément de maintien supérieur (6), et qui sont susceptibles d'être positionnés par un moyen de force (3) pour établir une liaison en coopération de formes et de forces à l'aide de leurs entraînements à broche (31, 31').

8. Dispositif selon l'une des revendications 2 à 7, **caractérisé en ce qu'**un élément de pincement (7) associé perpendiculairement aux bras de cadre (22, 29) est réalisé avec faculté de rabattement vers le haut dans une articulation (34) dont l'axe de basculement (35) s'étend parallèlement à la ligne de laminage, et ceci à l'aide d'au moins un moyen de force (36) pour accoupler les deux bras de cadre (22, 29), ou avec faculté de rabattement vers le bas pour défaire l'accouplement des bras de cadre.
